# EUROPÄISCHE PATENTSCHRIFT

(11) **EP 4 097 325 B1**
(45) Veröffentlichungstag und Bekanntmachung des Hinweises auf die Patenterteilung: **27.08.2025**
(21) Anmeldenummer: 21704175.5
(22) Anmeldetag: 01.02.2021
(51) Int. Cl.: E06B 3/67, E06B 3/66, E06B 9/24

(54) **BAUELEMENT MIT EINEM SCHEIBENZWISCHENRAUM MIT VERÄNDERBARER OPTISCHER TRANSPARENZ**
COMPONENT HAVING AN INTERMEDIATE SPACE WITH CHANGEABLE OPTICAL TRANSPARENCY
ÉLÉMENT DE CONSTRUCTION POURVU D'UN ESPACE INTERVITRES À TRANSPARENCE OPTIQUE MODULABLE

(30) Priorität: 31.01.2020 LU 101623
(43) Veröffentlichungstag der Anmeldung: 07.12.2022
(73) Patentinhaber: Demircan, Ziya, 54329 Konz (DE)
(72) Erfinder: DEMIRCAN, Ziya, 54329 Konz (DE); DEMIRCAN, Fatih Kursad, 54329 Konz (DE); DEMIRCAN, Erdinc Muhammed, 54329 Konz (DE)
(74) Vertreter: Kutsch, Bernd
(86) Internationale Anmeldenummer: PCT/DE2021/100090
(87) Internationale Veröffentlichungsnummer: WO 2021/151437

(56) Entgegenhaltungen:
- EP-A1- 0 402 529
- DE-A1- 102006 009 620
- DE-A1- 2 249 543
- DE-U1- 20 211 924

## Beschreibung

Die Erfindung betrifft ein Bauelement wie beispielsweise ein Fenster, eine Tür, ein Wintergartenelement, eine Balkonverglasung oder eine andere Abtrennung mit einem Scheibenzwischenraum mit veränderbarer optischer Transparenz, insbesondere zur Verwendung als Sichtschutzelement oder zur Bereitstellung von Sichtschutz.

### Stand der Technik

Aus DE 698 262 ist ein Verfahren und eine Vorrichtung zur Verdunkelung von Lichtflächen in Gebäuden bekannt. Dazu wird der Zwischenraum zwischen zwei Glasscheiben mit einem Nebel oder einem Gas gefüllt, sodass Licht aus dem Inneren des Gebäudes nicht mehr nach außen dringt. Der Nebel oder das Gas befindet sich dabei in einem externen Vorratsbehälter und wird bei Bedarf in den Zwischenraum gepumpt bzw. von dort wieder abgesaugt.

Ähnliche Vorschläge sind auch aus DE 10 2006 009 620 A1, DE 202 11 924 U1, der gattungsgemäßen DE 22 49 543 A1 und EP 0 402 529 A1 bekannt.

Aus FR 2 599 781 ist eine Vorrichtung bekannt, wobei dort ein farbiges Fluid wie ein farbiges Gas in den Zwischenraum eingebracht wird, was technische oder ästhetische Zwecke haben kann. Eine selektive Veränderung der Farbe des Lichtes, das zwischen den Glasscheiben durchgeht, ist auch aus US 4,044,519 bekannt. Dort werden farbige Flüssigkeiten verwendet. Ähnliche Ansätze sind auch aus EP 2 279 320, US 2,378,591, US 2,062,747 und DE GM 76 10 287 bekannt, sowie aus DE 10 2006 009 620 A1, DE 202 11 924 U1, DE 22 49 543 A1 und EP 0 402 529 A1. Zudem ist es aus DE 10 2006 009620 A1 bekannt ein Bauelement mit einer Beleuchtungsvorrichtung zur Beleuchtung eines Inneren eines Zwischenraumbereiches zu versehen.

In US 2,489,751 und US 2,373,214 wird der Lichtdurchgang durch ein transparentes Dach eines Fahrzeuges durch Einbringen einer Flüssigkeit bzw. eines Fluids in einen Zwischenraum zwischen zwei Glasscheiben verändert.

FR 613 587 beschreibt einen Scheinwerfer eines Autos, der zwei Scheiben mit einem Zwischenraum hat, wobei der Zwischenraum zum Abblenden des Scheinwerfers zeitweilig mit einer einem farbigen Fluid aus einem Reservoir gefüllt werden kann.

### Zusammenfassung und Vorteile der Erfindung

Die Erfindung betrifft ein Bauelement gemäß Anspruch 1.

Vorteilhafte Weiterführungen der Erfindung sind Gegenstand der abhängigen Ansprüche.

In einer bevorzugten Ausgestaltung der Erfindung wird ein Bauelement bereitgestellt, das eine erste, optisch transparente Scheibe und eine zweite, optisch transparente Scheibe aufweist. Vorzugsweise sind beide Scheiben Glasscheiben oder Plexiglasscheiben.

In einer anderen bevorzugten Ausgestaltung der Erfindung wird ein Bauelement bereitgestellt, das eine erste, optisch transparente Scheibe und eine zweite, optisch transparente Scheibe aufweist. Das Bauelement weist daneben eine Beleuchtungsvorrichtung zur Beleuchtung zumindest des Inneren des ersten Zwischenraumbereiches auf.

In einer bevorzugten Ausgestaltung der Erfindung wird ein Bauelement bereitgestellt, das eine erste, optisch transparente Scheibe und eine zweite, optisch transparente Scheibe aufweist. Das Bauelement hat daneben eine Beleuchtungsvorrichtung zur Beleuchtung zumindest des Inneren des ersten Zwischenraumbereiches und die Trennvorrichtung ist beweglich ausgestaltet.

Vorzugsweise ist die Trennvorrichtung innerhalb des Zwischenraumes horizontal oder vertikal beweglich angeordnet, sodass durch eine Bewegung der Trennvorrichtung die Größe des ersten Zwischenraumbereiches bzw. das Verhältnis der Größe des ersten Zwischenraumbereiches zu der Größe des zweiten Zwischenraumbereiches verändert werden kann.

Die Beleuchtungsvorrichtung weist vorzugsweise eine oder mehrere LEDs, einen oder mehrere Laser oder andere Mittel zur Beleuchtung zumindest des Inneren des ersten Zwischenraumbereiches auf. Besonders bevorzugt sind ein oder mehrere, zumindest bereichsweise um den ersten Zwischenraumbereich umlaufende Lichtstreifen oder Lichtleiter vorgesehen.

Die Absaugvorrichtung ist in einer ersten Ausführungsform der Erfindung außerhalb des Zwischenraumes oder des ersten Zwischenraumbereiches und vorzugsweise auch außerhalb des Bauelementes angeordnet und mit dem ersten Zwischenraumbereich über eine Leitung verbunden.

Die Absaugvorrichtung ist in einer anderen Ausführungsform der Erfindung innerhalb des Zwischenraumes oder innerhalb des ersten Zwischenraumbereiches angeordnet oder Teil der Trennvorrichtung oder in diese integriert.

In einer bevorzugten Ausgestaltung der Erfindung ist die erste Scheibe und vorzugsweise auch die zweite Scheibe und, falls vorhanden, die mindestens eine weitere Scheibe aus Glas, Plexiglas oder einem anderen durchsichtigen oder glasähnlichen Material ausgebildet.

In einer bevorzugten Ausgestaltung der Erfindung ist ein Mittel vorgesehen, um den Zwischenraum insbesondere zu Wartungs- oder Reinigungszwecken zugänglich zu machen und/oder damit die erste Scheibe bewegt, geöffnet oder entfernt werden kann.

Das Bauelement kann ein Fenster oder ein Verglasungselement eines Fensters oder eines Wintergartens sein. Alternativ kann das Bauelement eine Tür, insbesondere eine Glastür, oder ein Verglasungselement einer Tür sein. Weiter kann das Bauelement ein Raumtrenner oder eine Trennwand oder Teil eines Raumtrenners oder einer Trennwand sein. Das Bauelement kann schließlich eine Duschkabine oder ein Teil einer Duschkabine sein, ein Aquarium oder ein Teil eines Aquariums sein oder ein Verglasungselement einer Balkonbrüstung oder Teil einer Balkonbegrenzung oder eine Lichtkuppel sein.

Durch das erfindungsgemäße Bauelement lässt sich in flexibler und effektiver Weise ein Sichtschutz insbesondere in oder an Gebäuden (Fenster, Türen, Lichtkuppeln, Duschkabinen, Aquarien, Balkonverglasungen, Wintergärten, Raumtrenner, Büroverglasungen, ...) bewerkstelligen, der nach Bedarf "eingeschaltet" und nach Bedarf auch wieder aufgehoben werden kann. Durch die bewegliche Trennvorrichtung kann dabei der sichtgeschützte Bereich nach Bedarf verändert werden. Die Beleuchtung kann einerseits ästhetischen Zwecken oder Beleuchtungszwecken dienen, sie verstärkt aber vor allem auch die Sichtschutzwirkung.

Die Trennvorrichtung kann natürlich auch mehrfach vorhanden sein, und es können entsprechend mehrere bewegliche solche Trennvorrichtungen vorgesehen sein. Auf diese Weise kann beispielsweise nur in einem Teil des Zwischenraumes der Lichtdurchgang verändert werden bzw. der Lichtdurchgang in verschiedenen Zwischenräumen in unterschiedlicher Wiese verändert werden.

Die Trennvorrichtung kann vorteilhaft auch zur Beleuchtung verwendet werden bzw. Teil der Beleuchtungsvorrichtung sein. Dazu ist sie beispielsweise als Hohlelement ausgebildet, und in dem Hohlelement sind beispielsweise LEDs angeordnet. Bei dieser Ausführungsform ist das Hohlelement zumindest bereichsweise beispielsweise aus Glas oder Plexiglas ausgeführt.

### Kurze Beschreibung der Zeichnungen

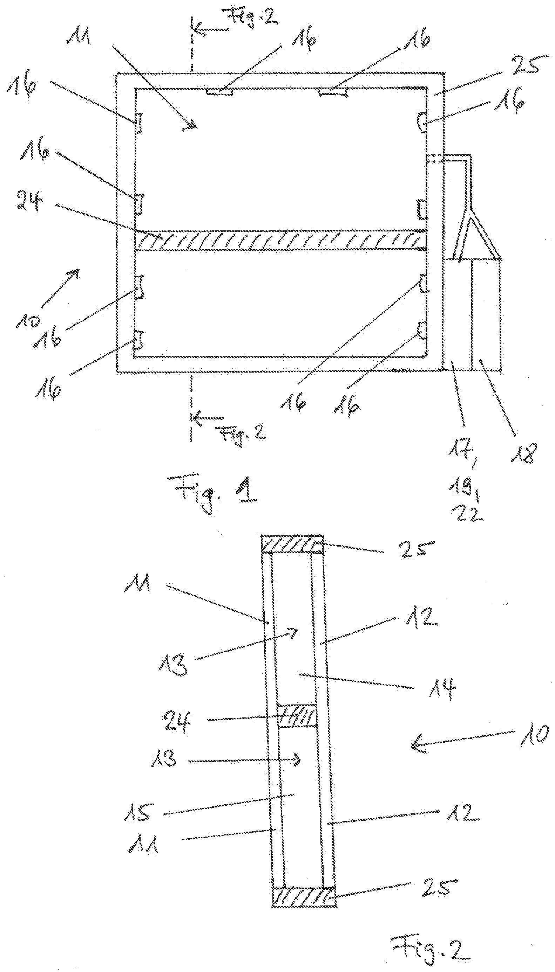

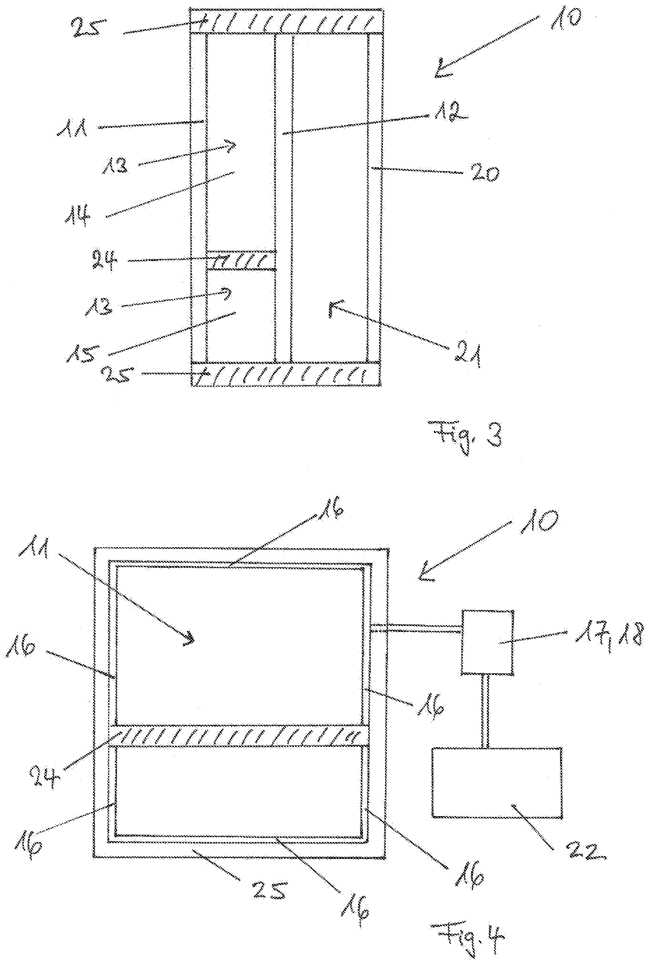

Die Figur 1 zeigt eine Draufsicht von vorne auf ein Bauelement in Form eines Fensters. Die Figur 2 zeigt einen Schnitt durch Figur 1 entlang der in Figur 1 eingezeichneten Schnittlinie. Die Figur 3 zeigt einen Schnitt analog zu Figur 2 durch eine zu Figur 1 alternative Ausführungsform eines Bauelementes in Form eines Fensters. Die Figur 4 zeigt eine Draufsicht von vorne auf eine weitere alternative Ausführungsform eines Bauelementes in Form eines Fensters.

### Detaillierte Beschreibung von bevorzugten Ausführungsbeispielen der Erfindung

Die Figur 1 zeigt eine Draufsicht von vorne auf ein Bauelement 10 in Form eines Fensters mit einem Rahmenprofil 25, in das eine erste Glasscheibe 11 und eine zweite Glasscheibe 12 eingesetzt ist. Zwischen den Scheiben 11, 12 befindet sich ein Zwischenraum 13, der mittels einer vorzugsweise nach oben und nach unten beweglichen Trennvorrichtung 24 in einen ersten Zwischenraumbereich 14 und einen zweiten Zwischenraumbereich 15 unterteilt ist. Bereichsweise oder umlaufend im Bereich des Rahmenprofils 25 sind eine oder mehrere Beleuchtungevorrichtungen 16 wie LEDs oder Lichtbänder angebracht, die das Innere des ersten Zwischenraumnbereiches 14 und vorzugsweise auch das Innere des zweiten Zwischenraumbereiches 15 beleuchten. Weiter ist eine Einbringvorrichtung 17 zum Einbringen von Nebel oder farbigem Gas in den ersten Zwischenraumbereich 14 vorgesehen, sowie eine Erzeugungsvorrichtung 19 für den Nebel bzw. das Gas. Diese Erzeugungsvorrichtung 19 kann eine Nebelmaschine sein, wie sie auf dem Gebiet der Veranstaltungstechnik an sich bekannt ist. Die Einbringvorrichtung 17 ist beispielsweise eine Pumpe, die über eine Leitung durch das Rahmenprofil 25 mit dem Zwischenraum 13 verbunden ist. Die Einbringvorrichtung 17 bringt den Nebel oder das Gas oder alternativ auch ein anderes Fluid wie eine farbige Flüssigkeit in den ersten Zwischenraumbereich 14 ein, sodass sich dort die optische Transparenz verändert und der erste Zwischenraumbereich 14 vorzugsweise zumindest weitgehend blickdicht wird. Zur Entfernung des Nebels, des Gases oder der Flüssigkeit ist ein Mittel zum Entfernen 18, beispielsweise eine Absaugvorrichtung vorgesehen. Die Einbringvorrichtung 17 und das Mittel zum Entfernen 18 können in einem gemeinsamen Bauteil integriert sein. Sie können entfernt von dem Rahmenprofil 25 angeordnet sein und mit diesem über Leitungen verbunden sein, sie können aber auch in der Rahmenprofil 25 oder in die Trennvorrichung 24 integriert sein, die dann dazu geeignete Einbringöffnungen bzw. Absaugöffnungen aufweist. Weiter sind nach Bedarf Ventile und Dichtungen vorgesehen. Das Mittel zum Entfernen 18 kann auch im unteren Bereich des Rahmenprofils 25 angeordnet oder angeschlossen sein und dort über eine Öffnung im Rahmenprofil 25 mit dem Zwischenraum 13 verbunden sein.

Die Erzeugungsvorrichtung 19 kann mit einer Speichervorrichtung 22 für Nebel, Gas oder Flüssigkeit kombiniert sein. Alternativ kann auf die Erzeugungsvorrichtung 19 auch verzichtet werden und nur eine Speichervorrichtung 22 in Form eines Tanks oder Reservoirs vorgesehen sein, der bzw. das bei Bedarf nachgefüllt werden kann. Die Einbringvorrichtung 17 kann auch einfach als unter Druck stehender Behälter ausgebildet sein. Das Mittel zum Entfernen 18 des Nebels, des Gases oder Flüssigkeit kann schließlich auch ein einfaches Ablassventil oder ein Ablauf bzw. eine Ablauföffnung insbesondere im unteren Bereich des Rahmenprofils 25 sein.

Die Figur 2 zeigt einen Schnitt durch Figur 1 entlang der in Figur 1 eingezeichneten Schnittlinie. Man sieht hier auch die zweite Scheibe 12 sowie das Rahmenprofil 25 und die Trennvorrichtung 24 im Schnitt.

Die Figur 3 zeigt einen Schnitt analog zu Figur 2 durch eine zu Figur 1 alternative Ausführungsform eines Bauelementes 10 in Form eines Fensters. Anders als bei Figur 1 bzw. 2 ist nun auch noch eine weitere Glasscheibe 20 vorgesehen, die vorzugsweise mit der zweiten Glasscheibe 12 und dem Rahmenprofil 25 wie bei handelsüblichen doppeltverglasten Fenstern verbunden bzw. gefertigt ist. Die weitere Scheibe 20 und die erste Scheibe 12 bilden somit einen weiteren Zwischenraum 21, der wie handelsüblichen doppeltverglasten Fenstern ausgebildet ist, d. h. insbesondere ein Vakuum oder ein wärmeisolierendes Gas beeinhaltet. Selbstverständlich können auch weitere Scheiben und entsprechende Zwischenräume vorgesehen sein (nicht dargestellt), wie bei dreifachverglasten Fenstern bekannt ist.

Die Figur 4 zeigt eine Draufsicht von vorne auf eine weitere alternative Ausführungsform eines Bauelementes 10 in Form eines Fensters, wobei diesmal im Unterschied zu Figur 1 keine Erzeugungsvorrichtung 19 vorgsehen ist, sondern lediglich eine Speichervorrichtung 22 in Fom eines Tanks oder Reservoirs. Weiter sind in Figur 4 die Einbringvorrichtung 17 und das Mittel zum Entfernen 18 in einem Bauteil integriert. Dieses Bauteil kann eine Pumpe sein, die umschaltbar in den Zwischenraum 13 hineinpumpen und aus dem Zwischenraum 13 absaugen kann. Wenn das in der Speichervorrichtung 22 enthaltene Fluid unter Druck steht, kann es auch ausreichend sein, die Einbringvorrichtung 17 als Einlassventil und das Mittel zum Entfernen 18 als Auslassventil bzw. beides als umschaltbares Ein-/Auslassventil auszubilden. In Figur 4 ist die Beleuchtungsvorrichtung 16 weiter als umlaufendes Lichtband ausgebildet.

Die Trennvorrichtung 24 ist vorzugsweise beweglich ausgestaltet, wie das bei im Inneren von mehrfachverglasten Fensterscheiben angebrachten Jalousien oder Rollladen bekannt ist. Die Trennvorrichtung 24 kann dabei bei horizontaler Anordnung horizontal bzw. bei vertikaler Anordung vertikal verschoben werden, sodass sich der von dem Nebel oder Fluid eingenommenen Raum vergrößert oder verkleinert. Dazu ist eine entsprechende Verstellvorrichtung wie sie z. B. aus Rollladen- oder Jalousieantrieben bekannt ist, vorgesehen, die mechanisch oder elektrisch angetrieben sein kann.

Die Trennvorrichtung 24 ist vorzugsweise mit Dichteinrichtungen wie Dichtlippen versehen, um den ersten Zwischenraumbereich 14 von dem zweiten Zwischenraumbereich 15 fluiddicht zu trennen, sodass kein oder im Wesentlichen kein Nebel, Gas oder Fluid in unerwünschter Weise von dem ersten Zwischenraumbereich 14 in den zweiten Zwischenraumbereich 15 übertritt. Die Trennvorrichtung 24 ist beispielsweise als verschiebbares Hohlelement, vorzugsweise als hohles rundes Rohr oder Stange oder als verschiebbarer, vorzugsweise hohler Balken ausgebildet. In diesem Fall kann die Erzeugungsvorrichtung 19 und/oder die Speichervorrichtung 22 und/oder das Mittel zum Entfernen 18 auch im Inneren des Hohlelementes angeordnet sein, wobei dieses dann vorzugsweise eine oder mehrere Öffnungen zum ersten Zwischenraumbereich 14 hin aufweist, durch die das Fluid bzw. der Nebel in den ersten Zwischenraumbereich 14 eingebracht und wieder entfernt werden kann.

Insgesamt ist das Bauelement 10 vorzugsweise derart ausgebildet, dass der mit Nebel, Gas oder Flüssigkeit gefüllte erste Zwischenraumbereich 14 blickdicht oder zumindest im Wesentlichen blickdicht ist, sodass das Bauelement 10 als Sichtschutz, Verdunkelung oder Abblendung eingesetzt werden kann.

Bei Verwendung eines Nebels, eines farbigen Gases oder einer farbigen Flüssigkeit lässt sich das Bauelement 10 auch zur ästhetischen Gestaltung von Räumen, Kabinen, abgegrenzten Bereichen, Balkonen, Fenstern, Türen usw. einsetzen.

Geeignete Nebel, Gase oder Flüssigkeiten und die entsprechenden Erzeugungsvorrichtungen sind beispielsweise aus dem Bereich der Veranstaltungstechnik bekannt, wo sie u. a. für Showeffekte bei Musikdarbietungen und in Diskotheken verwendet werden. Die dort eingesetzten Materialien können auch im Rahmen der vorliegenden Erfindung eingesetzt werden. Gleiches gilt für Nebel-, Gas- oder Flüssigkeitserzeugungsvorrichtungen und entsprechende Speichereinrichtungen wie Tanks oder Reservoirs.

In einem bevorzugten Ausführungsbeispiel ist der verwendete Nebel oder das verwendete Gas weiß.

Durch die beweglich ausgestaltete Trennvorrichtung 24 kann der erste Zwischenraumbereich 14 somit gezielt vergrößert oder verkleinert werden, sodass darüber eine Steuerung des beispielsweise sichtgeschützen Bereiches erfolgen kann.

Als Beleuchtungseinrichtung 16 kommen handelsübliche Lichtstreifen, Lichterketten, Laseranordnungen, LEDs, Glühlampen usw. in Frage, die beispielsweise bereichsweise oder umlaufend um den ersten Zwischenraumbereich 14 angeordnet sind und dessen Innenraum beleuchten. Durch Kombination der Beleuchtung mit dem darin befindlichen Nebel, farbigen Gas oder der darin befindlichen farbigen Flüssigkeit ergeben sich ästhetisch schöne Lichteffekte, bewegte Bilder bzw. Lichtflächen. Außerdem kann das Bauelement 10 mit der Beleuchtungseinrichtung 16 so auch zur Beleuchtung eines Raumes dienen. Vor allem bewirkt die Beleuchtung in Kombination mit dem Nebel oder farbigen Gas bzw. Fluid eine Verstärkung des Sichtschutzes durch den Nebel oder das Fluid, wie das jedem Autofahrer bekannt ist, wenn er bei starkem Nebel und mit heller Beleuchtung fährt oder einem hellen Licht des Gegenverkehrs ausgesetzt ist. Durch die Beleuchtung und den Nebel bzw. das Gas entsteht eine Lichtreflexion, die die optische Transparenz des ersten Zwischenraumbereiches 14 für den Betrachter weiter verrringert und so den Sichtschutz verbessert.

Für Wartungs- und Renigungszwecke ist das Bauelement 10 vorzugsweise so gestaltet, dass sich die erste Scheibe 11 öffnen lässt bzw. der Zwischenraum 13 zugänglich gemacht werden kann.

Zur Regelung der optischen Transparenz des Bauelementes 10 auf ein gewünschtes oder voreingestelltes Niveau kann eine Sensorik (z. B. eine Photozelle oder ein Streulichtdetektor mit zugehöriger Elektronik) vorgesehen sein, die den Lichtdurchgang durch den ersten Zwischenraumbereich 14 zwischen der ersten und der zweiten Scheibe 11, 12 misst und entsprechend, je nach gewünschtem Transparenzgrad, die Menge, den Ort der Zuführung und/oder die Dichte des zugeführten oder abgeführten Nebels oder Fluids über eine Steuerungsvorrichtung vorzugsweise drahtgebunden oder drahtlos (z.B. über ein WLAN) automatisch steuert.

Die Steuerung oder Regelung der optischen Transparenz des Bauelementes 10 auf ein gewünschtes oder voreingestelltes Niveau kann alternativ auch rein manuell drahtgebunden oder drahtlos (z. B über ein WLAN) eine Steuerungsvorrichtung erfolgen, mit der entsprechend dem gewünschtem Transparenzgrad, die Menge, der Ort der Zuführung und/oder die Dichte des zugeführten oder abgeführten Nebels oder Fluids verändert wird.

In einer bevorzugten Ausführungsform der Erfindung erfolgt die Steuerung oder Regelung der der optischen Transparenz des Bauelementes 10 auf ein gewünschtes oder voreingestelltes Niveau über eine drahtlose Verbindung, beispielsweise über ein WLAN, und über eine entsprechende Software, insbesondere mit Hilfe einer entsprechenden App, über die auf die Steuerungsvorrichtung zur Steuerung oder Regelung der optischen Transparenz des Bauelementes 10 auf ein gewünschtes oder voreingestelltes Niveau zugegriffen werden kann. Ein solche drahtlose Steuerung mit Hilfe einer App kann erneut entweder rein manuell sein oder im Zusammenwirken mit einer Sensorik (z. B. eine Photozelle oder ein Streulichtdetektor mit zugehöriger Elektronik), die den Lichtdurchgang durch den ersten Zwischenraumbereich 14 zwischen der ersten und der zweiten Scheibe 11, 12 misst und entsprechend, je nach gewünschtem Transparenzgrad, die Menge, den Ort der Zuführung und/oder die Dichte des zugeführten oder abgeführten Nebels oder Fluids vorzugsweise automatisch steuert.

Das Rahmenprofil 25 ist vorzugsweise ein Hohlprofil, wie es aus dem Fensterbau bekannt ist. In dieses Hohlprofil können die erforderlichen elektrischen Leitungen bzw. Fluidleitungen integeriert bzw. durch dieses durchgeführt sein.

Die Scheiben 11, 12, 20 können als starre Glasscheiben aber auch als flexible Scheiben oder selbsttragende transparente Folien ausgebildet sein. Insbesondere können sie auch gekrümmt sein, d. h. das Bauelement 10 muss nicht flach sein sondern kann auch halbzylinderförmig, kalottenförmig, halbkugelförmig usw. gestaltet sein.

Die Versorgung des Bauelementes 10 mit elektrischer Energie erfolgt vorzugsweise über eine Batterie oder einen Akku. Es kann aber auch an die elektrische Stromversorgung angeschlossen sein. Besonders bevorzugt ist die Integration einer Solarzelle in das Bauelement 10 oder die elektrische Verbindung des Bauelementes 10 mit einer Solarzelle, um so die erforderliche elektrische Energie bereitzustellen.

## Patentansprüche

1. Bauelement mit
einer ersten, optisch transparenten Scheibe (11) und einer zweiten Scheibe (12), insbesondere einer zweiten, optisch transparenten Scheibe (12), wobei die ersten Scheibe (11) und die zweite Scheibe (12) zumindest bereichsweise über einen Zwischenraum (13) voneinander beabstandet sind;
einer Trennvorrichtung (24), die den Zwischenraum (13) in einen ersten Zwischenraumbereich (14) und einen zweiten Zwischenraumbereich (15) unterteilt;
einer Einbringvorrichtung (17) zum Einbringen von Nebel, einem den Durchgang von Licht zumindest durch den ersten Zwischenraumbereich (14) verändernden, insbesondere farbigem Gas oder einer den Durchgang von Licht zumindest durch den ersten Zwischenraumbereich (14) verändernden, insbesondere farbigen Flüssigkeit zumindest in den ersten Zwischenraumbereich (14); und
einem Mittel (18) zum Entfernen des Nebels, der Flüssigkeit oder des Gases zumindest aus dem ersten Zwischenraumbereich (14);
**dadurch gekennzeichnet, dass** die Trennvorrichtung (24) beweglich ist; und
(i) die Trennvorrichtung (24) den ersten Zwischenraumbereich (14) von dem zweiten Zwischenraumbereich (15) zumindest im Wesentlichen gasdicht, flüssigkeitsdicht oder nebeldicht trennt, insbesondere mittels einer oder mehreren Dichtungen; oder
(ii) die Trennvorrichtung (24) innerhalb des Zwischenraumes (13) beweglich ist, insbesondere horizontal oder vertikal beweglich angeordnet ist, sodass durch eine Bewegung der Trennvorrichtung (14) die Größe des ersten Zwischenraumbereiches (14) verändert werden kann oder das Verhältnis der Größe des ersten Zwischenraumbereiches (14) zu der Größe des zweiten Zwischenraumbereiches (15) verändert werden kann, und die Trennvorrichtung (24) in Form eines Stabes oder Balkens oder als Hohlelement ausgebildet ist; oder
(iii) das Bauelement (10) eine Beleuchtungsvorrichtung (16) zur Beleuchtung zumindest des Inneren des ersten Zwischenraumbereiches (14) aufweist; eine Erzeugungsvorrichtung (19) zur Erzeugung des Nebels oder des Gases vorgesehen ist und/oder eine Speichervorrichtung (22) zur Speicherung des Nebels, der Flüssigkeit oder des Gases vorgesehen ist; und die Erzeugungsvorrichtung (19) innerhalb des Zwischenraumes (13) oder innerhalb des ersten Zwischenraumbereiches (14) angeordnet ist oder sie Teil der Trennvorrichtung (14) oder in diese integriert ist und/oder die Speichervorrichtung (22) innerhalb des Zwischenraumes (13) oder innerhalb des ersten Zwischenraumbereiches (14) angeordnet ist oder sie Teil der Trennvorrichtung (14) oder in diese integriert ist.

2. Bauelement nach Anspruch 1, wobei das Bauelement die Merkmale von Abschnitt (i) und von Abschnitt (ii) hat und wobei:
das Bauelement (10) eine Beleuchtungsvorrichtung (16) zur Beleuchtung zumindest des Inneren des ersten Zwischenraumbereiches (14) aufweist und weiter eine Steuervorrichtung zur automatischen Regelung oder manuellen Steuerung der optischen Transparenz des Bauelementes (10) auf ein gewünschtes oder voreingestelltes Niveau vorgesehen ist.

3. Bauelement nach Anspruch 1, wobei das Bauelement die Merkmale von Abschnitt (i) und/oder von Abschnitt (ii) und wobei:
das Bauelement (10) eine Beleuchtungsvorrichtung (16) zur Beleuchtung zumindest des Inneren des ersten Zwischenraumbereiches (14) aufweist und weiter eine Steuervorrichtung zur automatischen Regelung oder manuellen Steuerung der optischen Transparenz des Bauelementes (10) auf ein gewünschtes oder voreingestelltes Niveau vorgesehen ist.

4. Bauelement nach Anspruch 1, wobei das Bauelement die Merkmale von Abschnitt (iii) sowie die Merkmale von einem oder beiden der Abschnitte (i) oder (ii) hat.

5. Bauelement nach Anspruch 1, 2, 3 oder 4, wobei eine Sensorik vorgesehen ist, die den Lichtdurchgang durch den ersten Zwischenraumbereich (14) zwischen der ersten und der zweiten Scheibe (11, 12) misst und, je nach einem gewünschtem oder voreingestellten Transparenzgrad, die Menge, den Ort der Zuführung und/oder die Dichte des zugeführten oder abgeführten Nebels oder Fluids über die Steuerungsvorrichtung steuert oder regelt.

6. Bauelement nach Anspruch 5, wobei die Steuerung oder Regelung drahtlos, insbesondere über ein WLAN, und mittels einer Software, insbesondere einer App, eingerichtet ist.

7. Bauelement nach einem der vorangehenden Ansprüche, wobei das Bauelement (10) eine Beleuchtungsvorrichtung (16) zur Beleuchtung zumindest des Inneren des ersten Zwischenraumbereiches (14) aufweist.

8. Bauelement nach einem der vorangehenden Ansprüche, wobei eine Erzeugungsvorrichtung (19) zur Erzeugung des Nebels oder des Gases vorgesehen ist und/oder dass eine Speichervorrichtung (22) zur Speicherung des Nebels, der Flüssigkeit oder des Gases vorgesehen ist.

9. Bauelement nach Anspruch 8, **dadurch gekennzeichnet, dass** die Erzeugungsvorrichtung (19) außerhalb des Zwischenraumes (13) oder des ersten Zwischenraumbereiches (14) und vorzugsweise auch außerhalb des Bauelementes (10) angeordnet ist und/oder dass die Speichervorrichtung (22) außerhalb des Zwischenraumes (13) oder des ersten Zwischenraumbereiches (14) und vorzugsweise auch außerhalb des Bauelementes (10) angeordnet ist.

10. Bauelement nach Anspruch 8, **dadurch gekennzeichnet, dass** die Erzeugungsvorrichtung (19) innerhalb des Zwischenraumes (13) oder innerhalb des ersten Zwischenraumbereiches (14) angeordnet ist oder dass sie Teil der Trennvorrichtung (14) oder in diese integriert ist und/oder dass die Speichervorrichtung (22) innerhalb des Zwischenraumes (13) oder innerhalb des ersten Zwischenraumbereiches (14) angeordnet ist oder dass sie Teil der Trennvorrichtung (14) oder in diese integriert ist.

11. Bauelement nach einem der vorangehenden Ansprüche, wobei die Trennvorrichtung (24) den ersten Zwischenraumbereich (14) von dem zweiten Zwischenraumbereich (15) gasdicht, flüssigkeitsdicht oder nebeldicht trennt, insbesondere mittels einer oder mehreren Dichtungen.

12. Bauelement nach einem der vorangehenden Ansprüche, wobei die Trennvorrichtung (24) in Form eines Stabes oder Balkens oder als Hohlelement ausgebildet ist.

13. Bauelement nach einem der vorangehenden Ansprüche, **dadurch gekennzeichnet, dass** mindestens eine weitere Scheibe (20), insbesondere mindestens eine weitere optisch transparente Scheibe (20) vorgesehen ist, die zumindest bereichsweise über einen weiteren Zwischenraum (21) von der zweiten Scheibe (12) beabstandet ist.

14. Bauelement nach einem der vorangehenden Ansprüche, **dadurch gekennzeichnet, dass** das Mittel (18) zum Entfernen des Nebels, der Flüssigkeit oder des Gases in Form einer Absaugvorrichtung ausgebildet ist.

15. Bauelement nach einem der vorangehenden Ansprüche, **dadurch gekennzeichnet, dass** das Bauelement (10) ein Fenster oder ein Verglasungselementes eines Fensters oder eines Wintergartens ist, dass das Bauelement (10) eine Tür, insbesondere eine Glastür oder ein Verglasungselement einer Tür ist, dass das Bauelement (10) ein Raumtrenner oder eine Trennwand oder Teil eines Raumtrenners oder einer Trennwand ist, dass das Bauelement (10) eine Duschkabine oder ein Teil einer Duschkabine ist, dass das Bauelement (10) ein Aquarium oder ein Teil eines Aquariums ist oder dass das Bauelement (10) ein Verglasungselement einer Balkonbrüstung oder Teil einer Balkonbegrenzung oder eine Lichtkuppel ist.

## Claims

1. Component with
a first, optically transparent pane (11) and a second pane (12), in particular a second optically transparent pane (12), wherein the first pane (11) and the second pane (12) are spaced apart from one another at least in some areas by means of a space (13);
a separating device (24) dividing the space (13) into a first space area (14) and a second space area (15);
an introduction device (17) for introducing fog, an in particular coloured gas changing the passage of light at least through the first space area (14), or an in particular coloured liquid changing the passage of light at least through the first space area (14); and
a means (18) for removing the fog, liquid, or gas at least from the first space area (14);
**characterised in that** the separating device (24) is movable; and
(i) the separating device (24) separates the first space area (14) from the second space area (15) at least substantially gas-tight, liquid-tight, or fog-tight, in particular by means of one or more seals; or
(ii) the separating device (24) is movable within the space (13), in particular positioned horizontally or vertically movable, so that by a movement of the separating device (14) the size of the first space area (14) can be changed or the ratio of the size of the first space area (14) to the size of the second space area (15) can be changed, and the separating device (24) is formed in the form of a rod or beam or as a hollow element; or
(iii) the component (10) has a lighting device (16) for illuminating at least the interior of the first space area (14); a generating device (19) is provided for the generation of the fog or gas and/or a storage device (22) is provided for storing the fog, liquid or gas; and the generating device (19) is arranged within the space (13) or within the first space area (14) or it is part of the separation device (14) or integrated into it, and/or the storage device (22) is arranged within the space (13) or within the first space area (14) or it is part of the separation device (14) or integrated in it.

2. Component according to claim 1, wherein the component has the features of section (i) and of section (ii) and wherein:
the component (10) has a lighting device (16) for illuminating at least the interior of the first space area (14) and wherein further a control device is provided for automatic regulation or manual control of the optical transparency of the component (10) to a desired or preset level.

3. Component according to claim 1, wherein the component has the features of section (i) and/or of section (ii) and wherein:
the component (10) has a lighting device (16) for illuminating at least the interior of the first space area (14) and wherein further a control device is provided for automatic regulation or manual control of the optical transparency of the component (10) to a desired or preset level.

4. Component according to claim 1, wherein the component has the features of section (iii) and the features of one or both of sections (i) or (ii).

5. Component according to claim 1, 2, 3 or 4, wherein a sensor system is provided which measures the passage of light through the first space area (14) between the first and the second pane (11, 12) and, depending on a desired or preset level of transparency, controls or regulates via the control device the quantity, the location of the feed and/or the density of the fog or fluid supplied or discharged.

6. Component according to claim 1 or 5, wherein control or regulation is set up wirelessly, in particular via a WLAN, and by means of software, in particular an app.

7. Component according one of the preceding claims, wherein the component (10) has a lighting device (16) for illuminating at least the interior of the first space area (14).

8. Component according to one of the preceding claims, wherein a generating device (19) is provided for the generation of the fog or the gas and/or wherein a storage device (22) is provided for storing the fog, liquid, or gas.

9. Component according to claim 8, **characterised in that** the generating device (19) is arranged outside the space (13) or the first space area (14) and preferably also outside the component (10), and/or that the storage device (22) is arranged outside the space (13) or the first space area (14) and preferably also outside the component (10).

10. Component according to claim 8, **characterised in that** the generating device (19) is arranged within the space (13) or within the first space area (14) or that it is part of the separating device (14) or integrated into it, and/or that the storage device (22) is arranged within the space (13) or within the first space area (14) or that it is part of the separating device (14) or integrated into it.

11. Component according to one of the preceding claims, wherein the separating device (24) separates the first space area (14) from the second space area (15) gas-tight, liquid-tight, or fog-tight, in particular by means of one or more seals.

12. Component according to one of the preceding claims, wherein the separation device (24) is formed in the form of a rod or beam or as a hollow element.

13. Component according to one of the preceding claims, **characterised in that** at least one further pane (20), in particular at least one further optically transparent pane (20) is provided, which is spaced apart from the second pane (12) at least in some areas by a further space (21).

14. Component according to one of the preceding claims, **characterised in that** the means (18) for removing the fog, the liquid or the gas is provided in the form of a suction device.

15. Component according to one of the preceding claims, **characterised in that** the component (10) is a window or a glazing element of a window or a conservatory, that the component (10) is a door, in particular a glass door or a glazing element of a door, that the component (10) is a room divider or a partition wall or part of a room divider or a partition wall, that the component (10) is a shower cubicle or part of a shower cubicle, that the component (10) is an aquarium or part of an aquarium, or that the component (10) is a glazing element of a balcony balustrade or part of a balcony boundary or a light dome.

## Revendications

1. Composant avec
une première vitre optiquement transparente (11) et une seconde vitre (12), en particulier une seconde vitre optiquement transparente (12), où la première vitre (11) et la seconde vitre (12) sont séparées l'une de l'autre au moins en partie par un espace (13);
un dispositif de séparation (24) divisant l'espace (13) en une première zone d'espace (14) et une deuxième zone d'espace (15);
un dispositif d'introduction (17) pour introduire du brouillard, un gaz en particulier coloré modifiant le passage de la lumière au moins à travers la première zone d'espace (14), ou un liquide en particulier coloré modifiant le passage de la lumière au moins à travers la première zone d'espace (14); et
un moyen (18) pour éliminer le brouillard, le liquide ou le gaz au moins de la première zone d'espace (14);
**caractérisé en ce que** le dispositif de séparation (24) est mobile; et
(i) le dispositif de séparation (24) sépare la première zone d'espace (14) de la deuxième zone d'espace (15) au moins de manière substantiellement étanche aux gaz, étanche aux liquides ou étanche au brouillard, en particulier au moyen d'un ou plusieurs joints; ou
(ii) le dispositif de séparation (24) est mobile dans l'espace (13), en particulier positionné de manière horizontale ou verticale, de sorte qu'un mouvement du dispositif de séparation (14) puisse changer la taille de la première zone spatiale (14) ou le rapport entre la taille de la première zone spatiale (14) et la taille de la deuxième zone spatiale (15), et le dispositif de séparation (24) est formé sous la forme d'une tige ou d'une poutre ou comme un élément creux; ou
(iii) le composant (10) est équipé d'un dispositif d'éclairage (16) pour éclairer au moins l'intérieur de la première zone d'espace (14); un dispositif de génération (19) est prévu pour la génération du brouillard ou du gaz et/ou un dispositif de stockage (22) est prévu pour stocker le brouillard, le liquide ou le gaz; et le dispositif de génération (19) est disposé à l'intérieur de l'espace (13) ou à l'intérieur de la première zone d'espace (14) ou il fait partie du dispositif de séparation (14) ou y est intégré, et/ou le dispositif de stockage (22) est disposé à l'intérieur de l'espace (13) ou à l'intérieur de la première zone d'espace (14) ou il fait partie du dispositif de séparation (14) ou y est intégré.

2. Composant selon la revendication 1, dans lequel le composant présente les caractéristiques de la section (i) et de la section (ii) et dans lequel:
le composant (10) est équipé d'un dispositif d'éclairage (16) pour éclairer au moins l'intérieur de la première zone d'espace (14) et en outre un dispositif de contrôle est prévu pour la régulation automatique ou le contrôle manuel de la transparence optique du composant (10) à un niveau souhaité ou prédéfini.

3. Composant selon la revendication 1, dans lequel le composant présente les caractéristiques de la section (i) et/ou de la section (ii) et dans lequel:
le composant (10) est équipé d'un dispositif d'éclairage (16) pour éclairer au moins l'intérieur de la première zone d'espace (14) et en outre un dispositif de contrôle est prévu pour la régulation automatique ou le contrôle manuel de la transparence optique du composant (10) à un niveau souhaité ou prédéfini.

4. Composant selon la revendication 1, dans lequel le composant présente les caractéristiques de la section (iii) et les caractéristiques d'une ou des deux sections (i) ou (ii).

5. Composant selon la revendication 1, 2, 3 ou 4, dans lequel un système de capteurs est prévu qui mesure le passage de la lumière à travers la première zone d'espace (14) entre la première et la deuxième vitre (11, 12) et, en fonction d'un niveau de transparence souhaité ou prédéfini, contrôle ou régule via le dispositif de commande la quantité, l'emplacement de l'alimentation et/ou la densité du brouillard ou du fluide fourni ou évacué.

6. Composant selon la revendication 1 ou 5, dans lequel le contrôle ou la régulation est mis en place sans fil, en particulier via un WLAN, et par le biais d'un logiciel, en particulier une application.

7. Composant selon l'une des revendications précédentes, dans lequel le composant (10) comprend un dispositif d'éclairage (16) pour éclairer au moins l'intérieur de la première zone d'espace (14).

8. Composant selon l'une des revendications précédentes, dans lequel un dispositif de génération (19) est prévu pour la génération du brouillard ou du gaz et/ou dans lequel un dispositif de stockage (22) est prévu pour stocker le brouillard, le liquide ou le gaz.

9. Composant selon la revendication 8, **caractérisé en ce que** le dispositif de génération (19) est disposé à l'extérieur de l'espace (13) ou de la première zone d'espace (14) et de préférence également à l'extérieur du composant (10), et/ou **en ce que** le dispositif de stockage (22) est disposé à l'extérieur de l'espace (13) ou de la première zone d'espace (14) et de préférence également à l'extérieur du composant (10).

10. Composant selon la revendication 8, **caractérisé en ce que** le dispositif de génération (19) est disposé à l'intérieur de l'espace (13) ou à l'intérieur de la première zone d'espace (14) ou qu'il fait partie du dispositif de séparation (14) ou y est intégré, et/ou que le dispositif de stockage (22) est disposé à l'intérieur de l'espace (13) ou à l'intérieur de la première zone d'espace (14) ou qu'il fait partie du dispositif de séparation (14) ou y est intégré.

11. Composant selon l'une des revendications précédentes, dans lequel le dispositif de séparation (24) sépare la première zone d'espace (14) de la deuxième zone d'espace (15) de manière étanche aux gaz, étanche aux liquides ou étanche au brouillard, en particulier au moyen d'un ou plusieurs joints.

12. Composant selon l'une des revendications précédentes, dans lequel le dispositif de séparation (24) est formé sous la forme d'une tige ou d'une poutre ou comme un élément creux.

13. Composant selon l'une des revendications précédentes, **caractérisé en ce qu'**au moins une autre vitre (20), en particulier au moins une autre vitre optiquement transparente (20) est prévue, qui est espacée du deuxième vitrage (12) au moins en certaines zones par un autre espace (21).

14. Composant selon l'une des revendications précédentes, **caractérisé en ce que** les moyens (18) pour éliminer le brouillard, le liquide ou le gaz sont fournis sous la forme d'un dispositif d'aspiration.

15. Composant selon l'une des revendications précédentes, **caractérisé en ce que** le composant (10) est une fenêtre ou un élément de vitrage d'une fenêtre ou d'une véranda, que le composant (10) est une porte, en particulier une porte en verre ou un élément de vitrage d'une porte, que le composant (10) est un séparateur de pièces ou une cloison ou une partie d'un séparateur de pièces ou d'une cloison, que le composant (10) est une cabine de douche ou une partie d'une cabine de douche, que le composant (10) est un aquarium ou une partie d'un aquarium, ou que le composant (10) est un élément de vitrage d'une balustrade de balcon ou une partie d'une clôture de balcon ou un dôme de lumière.
